# DEMANDE DE BREVET EUROPEEN

(11) **EP 4 079 662 A1**
(43) Date de publication de la demande: **26.10.2022**
(21) Numéro de dépôt: 22168660.3
(22) Date de dépôt: 15.04.2022
(51) Int. Cl.: B65G 25/02, B65G 35/06

(54) **SYSTÈME DE CHARGEMENT ET DÉCHARGEMENT DE PLAQUES DANS UNE MACHINE TRAITANT DES RÉCIPIENTS**

(30) Priorité: 16.04.2021 FR 2103974
(71) Demandeur: SYNERLINK, 95650 Puiseux-Pontoise (FR)
(72) Inventeur: COSSAIS, Dominique, 91700 SAINTE GENEVIÈVE DES BOIS (FR); DOITEAU, Gaëtan, 72000 LE MANS (FR); ROYER, Jean-Michel, 95650 PUISEUX PONTOISE (FR)
(74) Mandataire: Derambure Conseil

(57) **Abrégé**

Système de manutention, dans une machine de traitement de récipients comprenant une pluralité de plaques-support (1) circulant en circuit fermé, chaque plaque-support (1) comprenant un ou plusieurs logements, chaque logement (18) étant apte à recevoir un récipient (5), un premier tronçon (TC1), dans lequel les plaques-support circulent en position horizontale le long d'une direction axiale X1A, un deuxième tronçon (TC2), dit de retour, avec un deuxième organe de déplacement (3) configuré pour déplacer les plaques-support dans une deuxième direction axiale X1B opposée, les plaques-support circulant sur le deuxième tronçon dans un orientation de retour verticale, le système de manutention comprenant une palette de réception (9) pour sélectivement soit décharger des plaques-support depuis le deuxième tronçon jusque sur la palette de réception, soit charger des plaques-support depuis la palette de réception jusque dans le deuxième tronçon.

## Description

La présente invention est relative aux systèmes de manutention dans une machine traitant des récipients de produit alimentaire. On peut appeler aussi ces machines des équipements ou lignes de production.

Ces machines (ou « équipements » ou « lignes ») permettent de remplir des récipients, par exemple des pots ou des bouteilles, avec un ou plusieurs produits alimentaires, par exemple un produit laitier et/ou des composants alimentaires, et de fermer hermétiquement ces récipients, avec en outre optionnellement marquage, étiquetage, désinfection préalable ou autre opération.

Ces machines/équipements utilisent des supports, par exemples des plaques, pour supporter les récipients pendant les opérations réalisées dans la machine.

Ces supports parcourent un circuit bouclé, en effet ils reviennent à vide après avoir été déchargés du/des récipients traité(s).

Ce genre de plaque-support est utilisé aussi dans des machines ou des installations qui traitent des récipients de produits non alimentaires auxquelles la présente invention peut être appliquée.

Ce genre d'installation fonctionne par campagne, chaque campagne permettant de produire une série de produits homogènes entre eux utilisant les mêmes plaques-support. Entre chaque campagne de production, il est nécessaire de reconfigurer l'installation et passer à un autre type de plaques-support pour la campagne à venir. Il s'avère que la taille des séries de production a tendance à diminuer, car les clients fonctionnent de plus en plus en juste à temps et les clients finaux achètent des lots de plus petite taille. Il s'ensuit que le temps nécessaire pour changer les plaques support dans l'installation devient un critère déterminant.

Il est donc apparu un besoin pour diminuer le temps nécessaire pour décharger des plaques support nécessaires pour la campagne de production qui se termine et recharger d'autres plaques support nécessaires pour la campagne de production à venir.

À cet effet, il est donc proposé un système de manutention, dans une machine de traitement de récipients destinés à recevoir un produit alimentaire, le système de manutention comprenant :
- une pluralité de plaques-support circulant en circuit fermé, chaque plaque-support comprenant un ou plusieurs logements, chaque logement étant apte à recevoir un récipient,
- un premier tronçon, dit de travail, dans lequel les plaques-support circulent en position horizontale le long d'une première direction axiale X1A, avec un premier organe de déplacement des plaques-support le long de la première direction axiale,
- un deuxième tronçon, dit de retour, avec un deuxième organe de déplacement configuré pour déplacer les plaques-support dans une deuxième direction axiale X1B opposée à la première direction axiale,
caractérisé en ce que les plaques-support circulent sur le deuxième tronçon dans un orientation de retour, ladite orientation de retour étant verticale ou éloignée angulairement de la verticale de moins de 30 degrés,
et en ce que le système de manutention comprend :
   - un premier poste de rotation agencé à une première extrémité du système de manutention, configuré, en fonctionnement normal, pour faire pivoter les plaques-support vers la position horizontale, pour les engager sur le premier tronçon,
   - un deuxième poste de rotation agencé à une deuxième extrémité du système de manutention, configuré, en fonctionnement normal, pour faire pivoter les plaques-support vers l'orientation de retour pour les engager sur le deuxième tronçon,
et en ce que le système de manutention comprend au moins une palette de réception d'une pluralité de plaques-support, configurée pour recevoir de préférence la totalité des plaques-support nécessaires au fonctionnement normal de la machine, ladite palette de réception coopérant avec le premier ou le deuxième poste de rotation (PR1,PR2) et le deuxième organe de déplacement pour sélectivement soit décharger des plaques-support depuis le deuxième tronçon jusque sur la palette de réception, soit charger des plaques-support depuis la palette de réception jusque dans le deuxième tronçon.

Grâce à ces dispositions, la reconfiguration de la machine est extrêmement rapide, on peut décharger l'ensemble des plaques support et recharger un nouveau jeu de plaques support très rapidement, le cas échéant dans un mode automatique, sans démonter aucune pièce du système de manutention.

On remarque que le déchargement et le re-chargement se produisent avec les plaques support dans leur orientation de retour, c'est-à-dire en position verticale ou quasiment verticale. Après déchargement, la palette avec ses plaques peut alors passer dans une machine à laver directement sans autre manipulation nécessaire. De même, au sortir de la machine à laver, et après un entreposage éventuel, la palette avec ses plaques-support peut être amenée pour un nouveau chargement de la machine ultérieur sans manipulation des plaques.

On note qu'il est possible, selon une première possibilité, de décharger toutes les plaques de la configuration précédente pour ensuite charger toutes les plaques pour la configuration à démarrer. Toutefois selon une deuxième possibilité, il est possible de procéder à un échange progressif du lot de plaques, c'est-à-dire décharger une 'ancienne' plaque et mettre une 'nouvelle' plaque à la place, et ainsi de suite jusqu'à ce que toutes les plaques soient remplacées.

On remarque qu'on utilise le deuxième organe de déplacement de manière particulière pour les séquences de chargement et déchargement des plaques support. Pour le chargement, on utilise le deuxième organe de déplacement dans un mode particulier et en réalise le chargement complet sans démonter aucune pièce du système de manutention.

Dans divers modes de réalisation de l'invention, on peut éventuellement avoir recours en outre à l'une et/ou à l'autre des dispositions suivantes, prises isolément ou en combinaison.

Selon un aspect, le premier poste de rotation comprend une première embase tournante, laquelle embase tournante est déplaçable entre une première position adaptée pour accueillir une plaque-support arrivant sur le deuxième tronçon dans un orientation de retour et une deuxième position adaptée pour placer une plaque-support en position horizontale en entrée du premier tronçon.

En fonctionnement normal, la première embase tournante fait pivoter les plaques-support vers la position horizontale, pour les engager sur le premier tronçon.

Selon un aspect, la palette de réception coopère avec le premier poste de rotation. Le déchargement se produit en extrémité aval du circuit de retour, c'est-à-dire à la fin du deuxième tronçon. La palette est positionnée sous la première embase tournante. Le chargement se fait également dans cette position, mais les plaques support sont introduites à rebrousse-poil sur le deuxième tronçon, c'est-à-dire dans la direction opposée à la direction utilisée en fonctionnement normal.

Selon un aspect, dans une configuration de déchargement des plaques-support depuis le deuxième tronçon jusque sur la palette de réception, la première embase tournante reste dans sa deuxième position de manière à laisser entrer au premier poste de rotation chaque plaque-support avec son orientation de retour, laquelle plaque-support venant alors s'insérer dans un emplacement de la palette de réception.

Selon un aspect, dans une configuration de chargement des plaques-support depuis la palette de réception jusque sur le deuxième tronçon, la première embase tournante reste dans sa deuxième position et le deuxième organe de déplacement fonctionne en sens inverse de son fonctionnement normal, pour faire sortir chaque plaque-support d'un emplacement de la palette de réception et faire remonter chaque plaque-support sur le deuxième tronçon avec son orientation de retour. Ainsi, il suffit de programmer un fonctionnement particulier du deuxième organe de déplacement pour réaliser l'automatisme de rechargement des plaques support dans la machine.

Selon un aspect, la palette de réception comprend une pluralité d'emplacements, espacés et parallèles les uns aux autres, et il est prévu un mécanisme de décalage, débarqué ou embarqué sur la palette elle-même, de manière à positionner un emplacement en alignement avec le parcours des plaques-support sur le deuxième tronçon, de manière à décharger ou charger une plaque-support respectivement depuis ou vers le deuxième tronçon.

Pour recevoir une nouvelle plaque support la palette est décalée le long de l'axe transversal Y, c'est-à-dire horizontalement et perpendiculaire à X.

Selon un aspect, les plaques support sont reçues en position verticale sur la palette de réception, et sont maintenues dans des emplacements en position verticale, avec de plus une absence de contact mutuel entre les plaques-support. Cela favorise le lavage et la décontamination des plaques support. Cela évite aussi un endommagement mécanique des plaques support par un contact lors du déplacement de la palette de réception.

Selon un aspect, les plaques support, lorsqu'elles sont agencées sur la palette de réception, sont espacées d'une distance prédéterminée, comprise entre 10 mm et 50 mm.

Selon un aspect, les plaques support, lorsqu'elles sont agencées sur la palette de réception, sont espacées d'une distance prédéterminée, avec un décalage entre plaques P9 compris entre 1,5 EPP et 2,5 EPP ; EPP représentant l'épaisseur en général de la plaque. Il est ainsi possible de stocker une vingtaine de plaques ou plus sur une palette de dimension raisonnable.

Lorsque les plaques support n'ont pas de projection hors plan, la distance P9 peut être réduite à 1,2 EPP ainsi on peut stocker un nombre très important de plaques sur la palette de réception sans perdre de place.

Selon un autre aspect, chaque plaque-support peut comprendre une platine de retournement. On peut ainsi traiter des bouteilles, avec une opération de nettoyage/désinfection tête en bas, puis retournement, puis emplissage et fermeture. On note que la palette de réception est compatible pour recevoir à la fois des plaques support monolithiques et des plaques support munies de platine de retournement.

Selon un aspect, il est prévu un élément d'arrêt pour stopper l'avancement des plaque-support vers la première embase tournante dans certaines conditions. Dans le mode de fonctionnement normal, l'élément d'arrêt bloque l'arrivée de la plaque support dans la première embase tournante tant que la première embase tournante n'est pas dans sa première position. Dans le mode spécial de déchargement, l'élément d'arrêt bloque l'arrivée de la plaque support tant qu'un emplacement de la palette de réception n'est pas disponible pour recevoir la plaque support. De plus, en mode déchargement, la première embase tournante reste dans sa deuxième position.

Autrement dit, l'élément d'arrêt peut être activé ou sélectivement effacé pour autoriser une plaque support à progresser vers la première embase tournante, que ce soit en fonctionnement normal ou en mode spécial de déchargement. Ainsi, en fonctionnement normal, au premier poste de rotation, on attend que l'embase tournante soit dans la position verticale (première position) pour effacer l'élément d'arrêt. Alors qu'en mode déchargement des plaques, c'est la disponibilité d'un emplacement aligné et vide de la palette réception qui conditionne l'effacement de l'élément d'arrêt afin de laisser passer une plaque arrivant en fin de deuxième tronçon TC2 pour chargement de la palette. L'élément d'arrêt peut être une butée effaçable sélectivement.

Selon un aspect, le système de manutention est tel qu'au poste de rotation PR1, on forme arrêt pour les plaques verticales en retour en attendant la position ad hoc de l'embase tournante. On forme ainsi une zone d'accumulation des plaques en retour, on stocke à cet endroit le surplus de plaques en attente.

Selon un aspect, lequel le deuxième poste de rotation comprend une deuxième embase tournante. La deuxième embase tournante fait pivoter les plaques-support vers l'orientation de retour pour les engager sur le deuxième tronçon.

Selon un aspect, le deuxième organe de déplacement, est formé comme un convoyeur à chaîne ou à courroie en boucle. Ce type de solution est rustique et robuste, et très fiable. En alternative on peut prévoir des galets motorisés comme deuxième organe de déplacement.

Selon un aspect, la courroie peut agir à frottement contre les plaques ou bien selon une variante la courroie peut être à double denture (une denture à l'intérieur pour l'entraînement de la courroie et une denture à l'extérieur pour l'entraînement des plaques-support par la courroie).

Selon un aspect, la courroie déplace les plaques support par frottement d'un brin de travail de la courroie sur la face inférieure des plaques support. En alternative des patins fixés sur la chaine viennent au contact des faces inférieures des plaques support en posture verticale pour entrainer les plaques.

Selon un aspect, la palette de réception comprend un montant de retenue avec des créneaux pour maintenir les plaques en position verticale. Ainsi lorsque la palette est décalée selon Y, voire même déplacer sur le transpalette, les plaques sont fermement maintenues en position verticale.

Selon un aspect, dans une configuration de chargement des plaques support, non seulement le deuxième organe de déplacement fonctionne à l'inverse de son fonctionnement normal mais la deuxième embase tournante peut elle aussi remonter des plaques support dans le premier tronçon de travail est aussi le premier organe de déplacement peut fonctionner à l'envers de son mode de fonction normale. Ceci permet de charger un nombre important de plaques support qui occupent tout le deuxième tronçon et une partie du premier tronçon. Autrement dit on remplit tout le deuxième tronçon et une partie du premier tronçon en poussant les plaques de l'aval vers l'amont.

Selon un aspect, le système est tel que, en fonctionnement normal, le nombre de plaques dans le premier tronçon est supérieur au double du nombre de plaques dans le deuxième tronçon. On minimise ainsi le nombre de plaques total ; la plupart des plaques sont utilisées sur le tronçon de travail et très peu de plaques sont présentes dans le tronçon de retour. A l'inverse, on remarque que dans nombre de systèmes connus de l'art antérieur le nombre de plaques sur le retour est égal au nombre de plaques sur le tronçon aller-travail.

Selon un aspect, le système est tel la vitesse moyenne sur le deuxième tronçon TC2 est substantiellement supérieure, voire très supérieure, à la vitesse moyenne sur le premier tronçon TC1. Cette caractéristique peut conduire également à minimiser le nombre de plaques dans le tronçon de retour.

Selon un aspect, les plaques comportent 8 logements, ou 4 ou 6 ou toute autre valeur. L'invention fonctionne quelque soit le nombre de logements prévus dans la plaque.

Selon un aspect, les plaques présentent une longueur longitudinale PX comprise entre 250mm et 880mm, de préférence comprise entre 360mm et 520mm, et de manière encore plus préférée comprise entre 400 mm et 480mm

Selon un aspect, les plaques ont une épaisseur EPP comprise entre 2 mm et 4 mm.

R+ Selon un aspect, dans la configuration d'échange progressif du lot de plaques, c'est-à-dire déchargement d'une 'ancienne' plaque et mise en place d'une 'nouvelle' plaque à la place, (et ainsi de suite jusqu'à ce que toutes les plaques soient remplacées), il peut être prévu un manipulateur pour tirer et/ou pousser une plaque vis-à-vis d'un emplacement sur le deuxième tronçon, ce manipulateur étant piloté en conjugaison avec le mécanisme de décalage des emplacements de palette mentionné plus haut.

La présente invention vise également une machine pour traiter des pots ou des bouteilles de produit alimentaire, comprenant un système de manutention tel que décrit précédemment.

Ainsi, les modules process peuvent venir par le dessus et le dessous sans être gênés par les supports des plaques.

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 illustre en vue de profil une machine ou un équipement comprenant un système de plaques selon la présente invention,
- la figure 2 illustre en vue perspective la machine de la figure 1,
- la figure 3 illustre en vue perspective un système de manutention selon un mode de réalisation de l'invention,
- la figure 4 illustre en vue perspective la zone du premier poste de rotation agencé à une première extrémité de du système,
- la figure 5 illustre en vue perspective la zone du deuxième poste de rotation agencé à une deuxième extrémité de du système,
- la figure 6 illustre une coupe transversale du système de manutention dans le premier tronçon, dit de travail,
- la figure 7 est analogue à la figure 6, illustrant en outre le premier organe de déplacement,
- la figure 8 illustre une coupe transversale du système de manutention dans le deuxième tronçon de retour,
- la figure 9 illustre une coupe transversale du système de manutention avec le guide support auxiliaire,
- la figure 10 montre une vue de face de la machine,
- la figure 11 illustre une plaque en vue de dessus (A), de côté (B) et de face (C),
- la figure 12 illustre une variante de plaque en vue de face,
- la figure 13 est analogue à la figure 9 et illustre plus en détail une coupe transversale du système de manutention selon une variante, au niveau de l'axe longitudinal.
- la figure 14 est analogue à la figure 9 et illustre plus en détail une coupe transversale du système de manutention selon une autre variante, au niveau de l'axe longitudinal.
- les figures 15 et 16 illustrent le convoyeur à courroie et sa motorisation, ayant pour fonction d'entraîner les plaques le long du deuxième tronçon,
- la figure 17 est analogue à la figure 1 et montre une variante de disposition générale du système de manutention par rapport à la machine
- la figure 18 montre une plaque en vue en perspective, et illustre un second mode de réalisation concernant les plaques-supports et le maintien des récipients dans les logements des plaques,
- la figure 19 illustre en perspective le système de manutention avec le système de palettes de réception pour le chargement et déchargement des plaques support,
- la figure 20 illustre en perspective une palette de réception, sur un transpalette, avec une seule plaque support,
- la figure 21 montre une coupe schématique de la palette de réception,
- la figure 22 illustre l'opération de déchargement des plaques support,
- la figure 23 illustre l'opération de chargement des plaques support.
- la figure 24 est analogue à la figure 21 et montre une coupe schématique de la palette de réception, selon le second mode de réalisation.
- la figure 25 illustre l'opération de remplacement progressif des plaques.

Sur les différentes figures, les mêmes références désignent des éléments identiques ou similaires. Pour des raisons de clarté de l'exposé, certains éléments peuvent intentionnellement ne pas être représentés à l'échelle sur les dessins.

### Généralités et agencement général

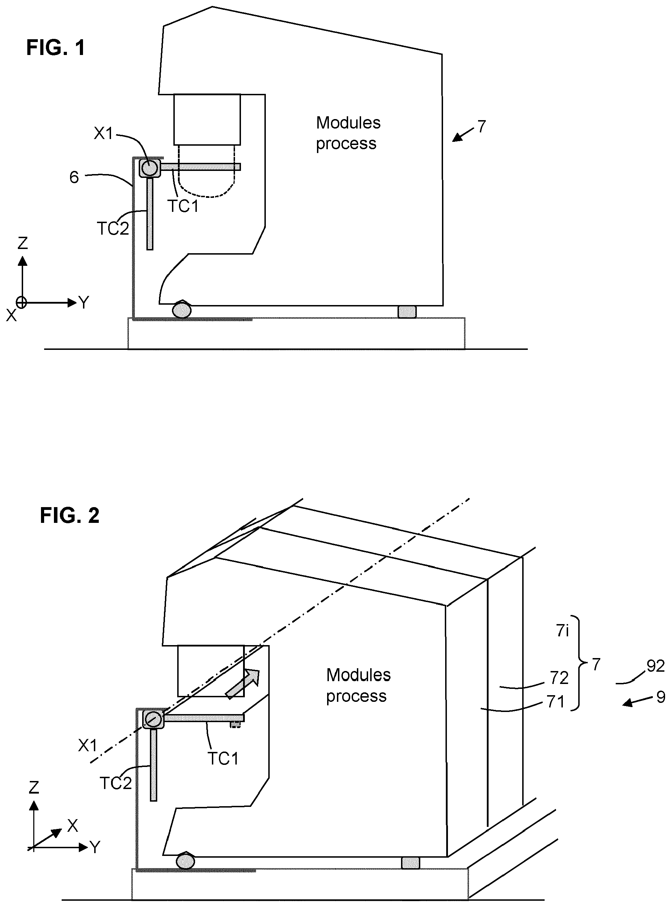

Les figures 1 et 2 représentent une machine traitant des récipients de produit alimentaire. Il peut s'agir de produits lactés, de sirops, de boissons en tout genre, voire de produits pâteux ou en poudre. La présente invention s'applique en effet à tout produit alimentaire.

On s'intéresse en particulier au système de manutention mis en œuvre dans ces machines. Toutefois on note que les systèmes de manutention décrits ci-après sont applicables à toute ligne de fabrication, même en dehors du domaine alimentaire.

Pour revenir au domaine alimentaire, ces machines/équipements/lignes permettent de remplir des récipients, par exemple des pots ou des bouteilles, avec un ou plusieurs produits alimentaires, par exemple un produit laitier et/ou des composants alimentaires, et de fermer hermétiquement ces récipients. Il peut être prévu en outre optionnellement des opérations de marquage, étiquetage, désinfection préalable. Toute autre opération n'est pour autant pas exclue. On a illustré aux figures 1 et 2 des modules de traitement juxtaposés dans le sens axial de la machine repérés respectivement **71**, **72**, **7i**. Les différents modules de traitement ou modules process sont collectivement repérés par la référence **7**.

On utilise des supports, que l'on va appeler *plaques-support*, ou même simplement *plaques*, pour supporter les récipients pendant les opérations réalisées dans la machine.

Ces supports, généralement repérés par la référence **1**, parcourent un circuit bouclé, c'est-à-dire fermé, en effet dans la machine, ils reviennent à vide après avoir été déchargés du/des récipients traité(s).

Selon un agencement général, le système de manutention comprend un premier tronçon **TC1**, dit de travail. En outre, le système de manutention comprend un deuxième tronçon **TC2**, dit de retour rapide.

On remarque ici que la réunion du premier tronçon **TC1** et du deuxième tronçon **TC2** forment ensemble, avec les postes de rotation aux extrémités décrits plus loin, un circuit fermé, c'est-à-dire un circuit bouclé en exploitation normale

A un endroit, chaque plaque-support **1** est chargée avec des récipients vides, et à un autre endroit, en aval, les récipients remplis sont ôtés de la plaque-support 1.

Chaque plaque-support **1** comprend un ou plusieurs logements **18**, chaque logement **18** étant apte à recevoir un récipient.

Selon une première possibilité, le récipient est reçu par le dessus, auquel cas c'est par l'effet de la gravité qu'un bord supérieur 58 du récipient porte sur un bord du logement. Le logement peut être formé comme un orifice. Selon cette première possibilité, le récipient est typiquement un pot **5** avec une collerette **58** plus large que son corps.

Selon une autre possibilité, le récipient peut être reçu par insertion latérale, un col du récipient vient se loger dans un logement présentant une embouchure et un détroit. Après passage du col du récipient par le détroit, le récipient reste retenu dans un trou de dimension correspondant à la dimension du col. Selon cette autre possibilité, le récipient est typiquement une bouteille avec un col et un goulot.

Le nombre de logements peut être de 4 ou de 8. Toutefois, le nombre de logements peut être quelconque, de 2 à 16.

Selon un agencement général, le système de manutention comprend une première extrémité **E1** et une deuxième extrémité **E2**.

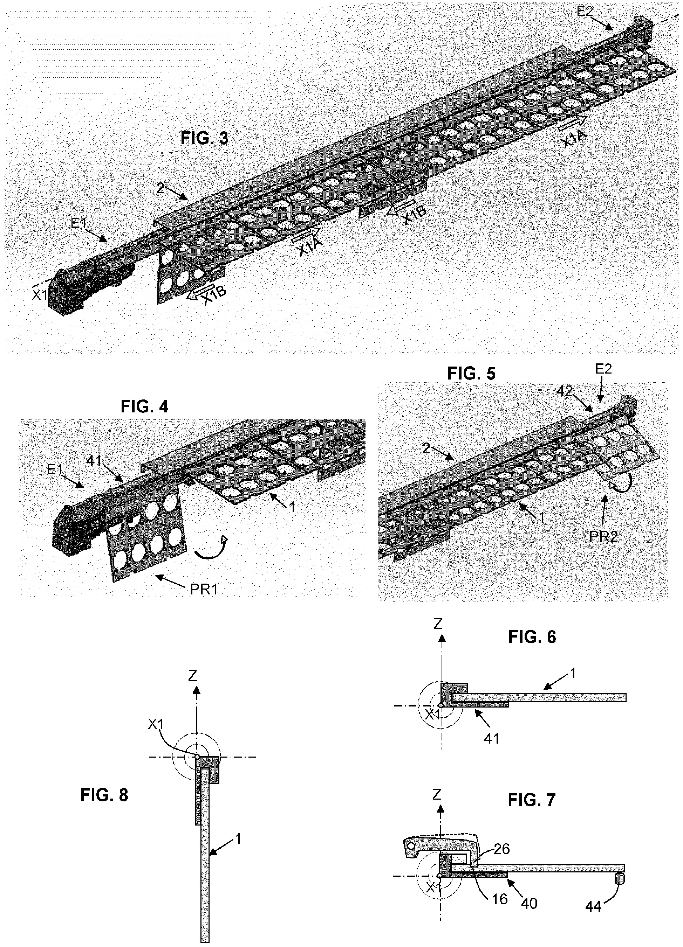

Comme illustré aux figures 3 à 5, selon un agencement général du système, il est prévu un premier poste de rotation **PR1** agencé à la première extrémité **E1**, configuré pour faire pivoter les plaques-support vers la position horizontale, pour les engager sur le premier tronçon **TC1**. De plus, il est prévu un deuxième poste de rotation **PR2** agencé à la deuxième extrémité **E2**, configuré pour faire pivoter les plaques-support vers l'orientation de retour pour les engager sur le deuxième tronçon **TC2**.

L'axe longitudinal de travail (i.e. de la machine) est noté **X** ; on définit un axe longitudinal de référence du système de manutention noté **X1**. L'axe transversal de la machine est noté **Y l**'axe vertical local est noté **Z**.

L'ensemble du système de manutention est supporté par un châssis général de support repéré **6** (représenté seulement de manière générique aux Figures 1, 2 et 17).

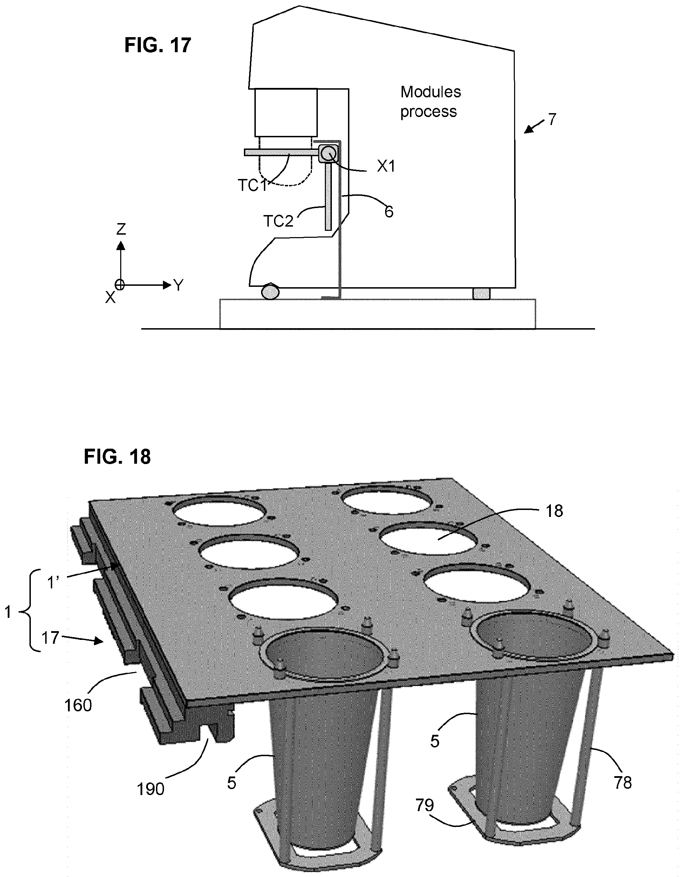

On remarque que deux configurations sont possibles. Aux figures 1 et 2, l'axe **X1** est situé côté extérieur de la machine, i.e. les plaques **1** dans le tronçon **TC1se** trouvent entre l'axe **X1** et les modules process 7. A la figure 17, c'est l'inverse, l'axe **X1** est situé côté intérieur de la machine, i.e. l'axe X1 se trouve entre les plaques **1** sur **TC1** et les modules process **7**.

### Plaque- supports et leur circulation

Comme visible aux figures 3 à 9 ainsi que 11A, 11B, 11C et 12, chaque plaque-support **1** s'étend généralement dans un plan de référence **PR**, avec une forme générale rectangle. Chaque plaque-support comprend deux petits côtés respectivement repérés 13 et 14, parallèles à la direction Y de la machine. Chaque plaque-support deux grands côtés parallèles à la direction longitudinale X de la machine, à savoir un premier grand coté **11** formant bordure de guidage et manoeuvre, et un autre grand coté **12** formant bordure libre. La longueur longitudinale notée **PX** est ici comprise entre 400 mm et 480mm. Toutefois plus généralement la longueur PX peut être comprise entre 250mm et 880mm, ou bien comprise entre 360mm et 520mm. La largeur de la plaque notée **LW** ici comprise entre 250 mm et 350 mm. Toutefois plus généralement la largeur LW peut être comprise entre 200 mm et 500 mm.

Chaque plaque-support est faite d'une seule pièce. Chaque plaque-support est plane. L'épaisseur d'une plaque **EPP** peut typiquement être comprise entre 1 et 3 mm. Typiquement, on part d'un flanc d'épaisseur constante et on y aménage les encoches et rainures dont il va être question plus loin. Selon un exemple l'épaisseur EPP peut être de 8 mm. Selon un autre exemple, l'épaisseur EPP peut être comprise entre 6 mm et 8 mm.

Chaque plaque-support **1** comprend une face supérieure **1A** et une face inférieure **1B**.

Chaque plaque-support **1** peut être fabriquée en inox ou en alliage métallique compatible alimentaire. Toutefois un matériau de type plastique dur compatible alimentaire comme du polypropylène ou du polycarbonate pourrait aussi convenir.

Dans le premier tronçon **TC1**, les plaques-support circulent en position horizontale dans une première direction axiale **X1A**. Dans les diverses illustrations, les plaques sont adjacentes les unes aux autres dans le premier tronçon. Toutefois il n'est pas exclu qu'elles soient légèrement espacées les unes des autres.

Dans le tronçon de retour **TC2**, les plaques-support avancent dans une deuxième direction axiale **X1B** opposée à la première direction axiale. Dans ce deuxième tronçon **TC2**, les plaques-support circulent dans une posture ou orientation qui est différente de la position horizontale. On utilise pour cette posture le terme «orientation de retour». Ladite orientation de retour est verticale dans l'exemple représenté. Dans une variante non représentée, l'orientation de retour peut être éloignée angulairement de la verticale de moins de 30 degrés, c'est-à-dire peu éloignée de la position verticale.

Le premier grand coté **11** forme une bordure de guidage et manœuvre. Les fonctions de guidage et d'entraînement sont localisés au voisinage de ce grand côté. Le bord correspondant à ce grand côté est reçu dans une/des rainure(s) de guidage et de réception de guides et d'embases tournantes comme il sera décrit plus loin.

Le bord opposé **12** est seulement guidé mais pas entrainé. La motorisation est ainsi relativement simple et se trouve localisée au voisinage de l'axe longitudinal **X1** du système de manutention.

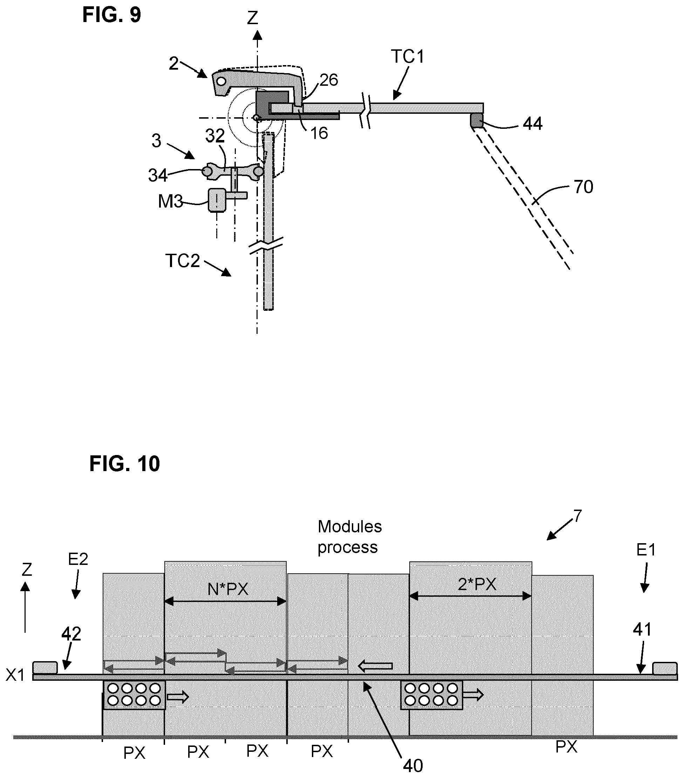

Selon une autre caractéristique, le bord long opposé **12** peut être supporté par un guide auxiliaire **44**. Ce guide auxiliaire peut être continu ou discontinu ; comme illustré la figure 9, ce guide auxiliaire 44 peut être porté par un bras **70** solidaire d'un des modules process susmentionnés **7i**. Ce guide auxiliaire **44** est de préférence amovible.

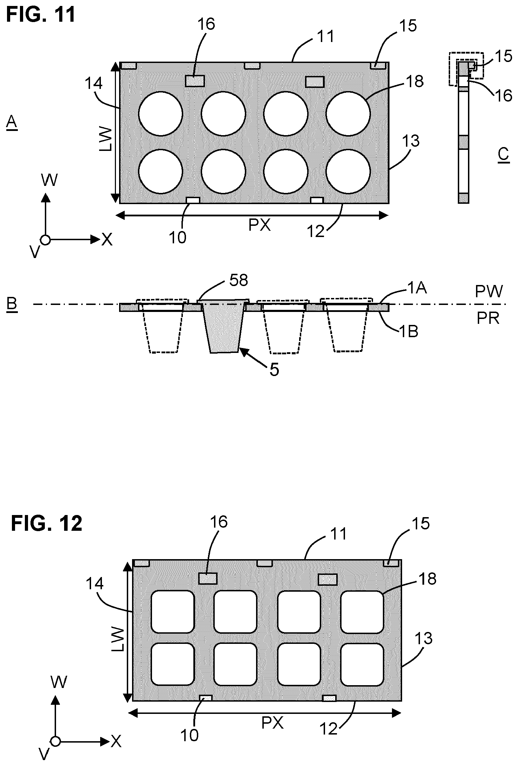

En référence aux figures 11 et 12, on constate que les logements prévus dans la plaque-support peuvent être ronds ou carrés suivant la forme des pots à traiter.

Chaque plaque-support comprend au moins une encoche **16** pour recevoir un doigt du premier organe de déplacement. On remarque que la ou les encoches **16** est (sont) de préférence traversante(s) sur l'épaisseur de la plaque. Ceci est facile à nettoyer et on évite que des saletés ne viennent se loger dans un trou borgne

Dans l'exemple illustré, chaque plaque-support comprend deux encoches.

De plus, selon une option, il est prévu une saillie **15** formant projection hors plan, laquelle sert à retenir la plaque notamment dans son orientation verticale.

Selon une configuration, au lieu d'une saillie, on utilise pour le maintien de la plaque une rainure longitudinale repérée **19** dans laquelle vient se loger une nervure longitudinale **28**, **29** prévue dans les moyens de guidage des plaques.

Dans une variante non représentée, la position des encoches **16** pour l'avancement des plaques et la position de la rainure longitudinale **19** pour le maintien et le guidage peuvent être confondues.

En outre, il peut être prévu des encoches auxiliaires repérées **10** dont l'utilité, notamment en position verticale, sera vue plus loin.

On remarque aussi que la plaque peut avoir une forme générale carrée au lieu de rectangle.

De plus il faut noter que les petits côtés ne sont pas forcément rectilignes ils peuvent comprendre un décroché convexe ou concave.

### Organes de déplacement

Dans le premier tronçon il est prévu un premier organe de déplacement **2** des plaques-support le long de la première direction axiale **X1A**. Dans une configuration illustrée, le premier organe est de type pas à pas. Toutefois, il faut noter que tout type de mécanisme déplacement peut être envisagé de la cadre de la présente invention.

Le premier organe de déplacement **2** comprend dans l'exemple illustré une barre transfert **21** qui s'étend généralement le long de la direction axiale et est monté pivotante autour de l'axe **X1**.

La barre transfert **21** du premier organe de déplacement **2** comprend un doigt **26** à distance de l'axe **X1** et configuré pour être reçu dans une encoche **16** de la plaque, le retour à vide du doigt étant réalisé alors que le doigt **26** n'est pas engagé.

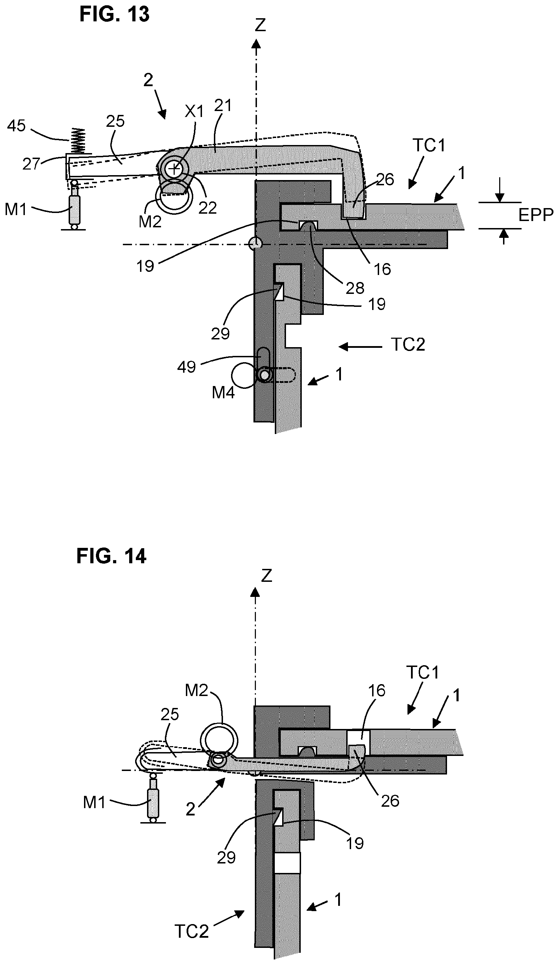

Comme illustré aux figures 13 et 14, la barre transfert **21** du premier organe de déplacement **2** fonctionne avec deux degrés de liberté, à savoir une rotation autour de **X1** et un avancement selon la direction axiale. La rotation permet l'engagement et le désengagement du doigt **26** dans une encoche **16**.

La translation axiale permet de faire avancer d'une distance prédéterminée une ou plusieurs plaques sur le premier tronçon. Dans l'exemple illustré à la figure 10, la distance prédéterminée coïncide avec la longueur axiale de la plaque c'est-à-dire le pas **PX**. Selon d'autres possibilités, par exemple avec deux encoches par plaque, la distance d'avance à chaque mouvement de la barre transfert peut être **PX/2**. Selon d'autres possibilités, par exemple avec quatre encoches par plaque, la distance d'avance à chaque mouvement de la barre transfert peut être **PX/4**.

La translation axiale est réalisée soit par un mécanisme de vis sans fin et écrou prisonnier, soit par un mécanisme pignon-crémaillère, soit encore au moyen d'un vérin électrique course longue. On peut généralement utiliser un mécanisme de translation axiale quelconque connu en soi.

Il est prévu un arbre d'axe noté **22**, qui peut être fixe ou solidaire de la barre transfert elle-même. Le dispositif comprend aussi un moteur noté **M2**, ou un moto réducteur, qui est placé au voisinage de l'arbre d'axe. Un pignon en sortie vient s'engager sur une crémaillère ou une denture hélicoïdale pour déplacer la barre transfert **21** le long de la direction longitudinale X1, avec rotation de l'arbre d'axe 22 ou non selon les configurations possibles.

S'agissant du mouvement d'engagement et de dégagement du doigt, la barre transfert est équipée d'un levier arrière repéré **25** solidairement relié au corps de la barre transfert ; le levier arrière **25** est reçu dans une liaison glissière **27**. Le levier arrière **25** peut ainsi coulisser selon X1 dans la glissière 27 longitudinalement. Comme dans le cas illustré à la figure 13, il est prévu un vérin de commande noté **M1** à simple effet ainsi qu'un ressort de rappel **45**. Le ressort de rappel a pour effet de basculer la barre transfert autour de l'axe X1 vers la position dégagée du doigt de commande 26, alors qu'à l'inverse l'actionnement du vérin M1 a pour effet de basculer la barre transfert dans la direction opposée et d'engager le doigt de commande dans l'encoche 16.

Sur la figure 14, on a illustré le cas d'un vérin à double effet ; dans ce cas le vérin est commandé dans une direction pour dégager le doigt de commande, et commandé dans la direction opposée pour engager le doigt de commande 26 afin de faire avancer les plaques.

Ainsi le premier organe de déplacement **2** peut être qualifié de « navette transfert ». Tout autre solution pour provoquer un avancement d'au moins une plaque sur une distance prédéterminée peut également être envisagée.

Concernant le nombre de doigts **26**, il peut être prévu autant de doigts que d'emplacement de plaques support dans le premier tronçon de travail ; dans ces conditions, la navette transfert engage simultanément toutes les plaques situées sur le tronçon de travail **TC1**. Ainsi la barre transfert 21 et l'arbre d'axe 22 parcourent quasiment toute la longueur du système de manutention excepté le cas échéant les extrémités. Ainsi, les plaques ne se poussent pas les unes des autres et ne sont pas nécessairement adjacentes. Ceci permet aussi de faire fonctionner la machine en essai avec uniquement quelques plaques.

Dans une autre variante, la navette transfert engage seulement la première plaque située au début du premier tronçon et les plaques se poussent les unes les autres jusqu'à la fin du premier tronçon. L'arbre d'axe et la barre transfert sont alors beaucoup plus courts, c'est-à-dire l'ordre de grandeur correspond à la longueur d'une plaque PX ou un peu plus.

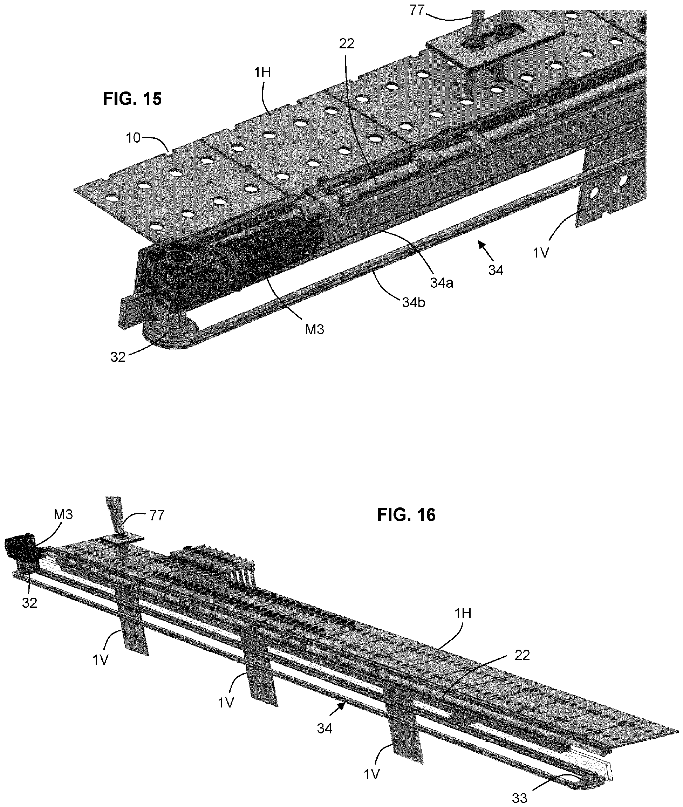

En alternative, la navette transfert peut travailler par le dessous comme illustré aux figures 14 et 15, cas illustré plus loin. Lorsque la barre transfert **21** est située en dessous de la face supérieure **1A** des plaques dans le tronçon de travail, la zone située au-dessus du plan de travail repéré **PW** est libre de tout élément qui peut présenter une gêne risque de pollution.

Lorsque le vérin **M1** pousse vers le haut la barre de commande bascule autour de **X1** et le doigt de commande 26 est dégagé de l'encoche 16. À l'inverse lorsque **M1** pousse vers le bas, la barre de commande bascule inversement autour de **X1** et le doigt de commande 26 est engagé de l'encoche 16.

Le système de manutention comprend un deuxième organe de déplacement **3** configuré pour déplacer les plaques-support dans la deuxième direction axiale **X1B** dans le deuxième tronçon **TC2**. Le deuxième organe de déplacement est de préférence de type continu.

Comme visible aux figures 9, 15 et 16, le deuxième organe de déplacement comprend une courroie sans fin repérée **34**. Cette courroie est guidée et entraînée par deux poulies à gorge, dont une poulie meneuse **32** entraînée par un moteur **M3** et une poulie suiveuse **33** à l'autre extrémité de la courroie. La courroie vient frotter sur la face inférieure **1B** des plaques, en posture d'orientation de retour, à savoir en position verticale, pour les entraîner de la deuxième extrémité **E2** vers la première extrémité **E1**.

La courroie peut agir à frottement contre les plaques ou bien selon une variante la courroie peut être à double denture. Dans ce dernier cas, il est prévu une denture à l'intérieur pour l'entraînement de la courroie par une poulie d'entrainement et une denture à l'extérieur pour l'entraînement des plaques-support par la courroie sur le tronçon de retour TC2.

En lieu et place de la courroie, le deuxième organe de déplacement peut être formé par une chaîne à maillons articulés montée en boucle sur deux pignons dentés aux extrémités. Un premier pignon denté est moteur, et l'autre est monté sur un support rappelé élastiquement par ressort pour tendre à maintenir une tension suffisante sur la chaîne en permanence. Il peut être prévu des patins fixés coté extérieur de certains maillons de la chaîne en boucle pour venir en appui sur les plaques dans leur posture verticale et entrainer les plaques.

Plus précisément, un brin de travail **34a** est agencé au contact des plaques qui se situent trouvent sur le deuxième tronçon alors qu'un brin de retour **34b** est à distance des plaques et sert pour le retour à vide. La vitesse d'avance du brin de travail de la courroie est relativement rapide. En pratique elle au moins égale à la vitesse d'avance de la barre transfert dans le sens opposé. Par exemple la vitesse d'avance de la courroie **34** peut être au moins égale à 500 mm par seconde.

La motorisation des plaques sur le deuxième tronçon pourrait être différente de celle illustrée par exemple un système avec impulsion, un retour par gravité, ou tout autre solution rendu possible par le fait qu'il n'y ait pas d'opération de travail sur les plaques sur ce tronçon de retour.

Comme illustré sur les figures 6 à 8, le premier poste de rotation **PR1** comprend une première embase tournante **41** du côté de la première extrémité **E1**. La première embase tournante fait pivoter les plaques-support vers la position horizontale, pour les engager sur le premier tronçon TC1. La première embase tournante peut être formée comme un élément monté à rotation autour d'un axe confondu avec **X1** ou voisin de ce dernier, cet élément étant piloté en position angulaire par un moto réducteur avec deux capteurs fins de course ou un moteur pas à pas avec un capteur fin de course.

La première embase tournante **41** est donc déplaçable entre une première position adaptée pour accueillir une plaque-support arrivant sur le deuxième tronçon dans un orientation de retour et une deuxième position adaptée pour placer une plaque-support en position horizontale en entrée du premier tronçon.

Il peut être prévu une butée effaçable **49** qui subordonne l'entrée d'une plaque verticale en retour dans l'embase tournante **41** à une position de réception verticale de cette embase tournante. La butée effaçable **49** est commandée sélectivement par un petit actuateur **M4**.

En variante, la butée effaçable peut être une forme intégrée dans le flanc de l'embase tournante **41**, sans nécessiter une commande spécifique autre que la rotation de l'embase tournante **41**.

Du côté de la deuxième extrémité **E2**, le deuxième poste de rotation **PR2** comprend une deuxième embase tournante **42**. La deuxième embase tournante fait pivoter les plaques-support vers l'orientation de retour pour les engager sur le deuxième tronçon **TC2**.

La deuxième embase tournante peut être formée comme un élément monté à rotation autour d'un axe confondu avec **X1** ou voisin de ce dernier, cet élément étant piloté en position angulaire par un moto réducteur avec deux capteurs fins de course ou un moteur pas à pas avec un capteur fin de course. Si la voie est libre, la deuxième embase tournante fait pivoter la plaque en position verticale et l'insère immédiatement dans le deuxième tronçon de retour **TC2**.

Chacune des embases tournantes comprend une rainure de réception du bord longitudinal, i.e. le grand coté **11** formant bordure de guidage et manœuvre.

Tant la première embase tournante que la deuxième embase tournante comprennent un moyen de rétention des plaques. Lorsque la plaque contient une projection hors plan **15**, les embases tournantes comprennent un logement formant glissières pour recevoir cette projection en plan (Cf figure 11).

Dans une variante, chaque plaque-support **1** comporte une rainure 19 de guidage. Les embases tournantes comprennent une nervure en saillie **29** sur laquelle vient porter à l'intérieur de la rainure **19** ménagée dans les plaques. (cf Fig 13 et 14 partie basse).

En outre, il est prévu un support guide principal fixe **40**, disposé de manière continue le long de la première direction axiale **X1A**, entre les première et deuxième embases tournantes **41**,**42**. Le support est ainsi continu pour les plaques depuis la première extrémité **E1** jusqu'à la deuxième extrémité **E2**.

Le support guide principal comprend une nervure **28** qui permet le guidage longitudinal des plaques, la nervure 28 étant reçue dans la rainure **19**.

Comme illustré la figure 13, le support guide principal est formé comme un profilé à section généralement constante le long de **X1**. Autrement dit, le support guide principal **40** forme un rail de guidage. Ce rail/profilé permet d'une part de guider des plaques en position horizontale qui transitent dans le premier tronçon **TC1**, et d'autre part de guider des plaques en position verticale dans le deuxième tronçon **TC2** où elles circulent en retour.

Ce genre de système avec plaques-support peut être utilisé aussi dans des machines ou des installations qui traitent des récipients de produits non alimentaires auxquelles la présente invention peut être appliquée.

### Fonctionnement

Dans le premier tronçon de travail, les plaques sont déplacées séquentiellement d'un poste à un autre par le premier organe de déplacement **2** décrit plus haut. Les plaques sont en position horizontale repère **1H** en figures 15 et 16. Suivant la configuration de la machine, diverses opérations sont effectuées à poste fixe, dans l'intervalle de temps entre les mouvements aller de la barre transfert. Selon un exemple très simplifié, illustré la figure 15, il est prévu des buses de dosage repérées **77**, localisé à l'endroit d'une des positions de la plaque.

A la fin du tronçon de travail **TC1**, la deuxième embase tournante **42** effectue une rotation de chaque plaque-support **1** autour de l'axe longitudinal de référence **X1** d'un angle θ (90° dans un cas type). Suite à quoi, chaque plaque parcourt le tronçon de retour en gardant substantiellement cette orientation. Les plaques sont en position verticale repère **1V** en figures 15 et 16. Les plaques sont déplacées le long du deuxième tronçon **TC2** par le deuxième organe de déplacement **3** décrit plus haut.

Après quoi la première embase tournante **41** fait tourner la plaque support subit une rotation dans le sens inverse autour de l'axe longitudinal **X1** d'un angle -θ, c'est-à-dire opposé à l'angle appliqué par la deuxième embase tournante.

Sur le fonctionnement complet en boucle, il faut remarquer que le premier tronçon **TC1** est totalement occupé par les plaques, alors que le deuxième tronçon **TC2** ne comprend que quelques plaques, comme ceci est visible de la figure 16.

Ainsi, le nombre de plaques sur le premier tronçon peut être compris entre une dizaine et une trentaine suivant la configuration de la machine. Par contraste, on ne trouve que 1 à 4 plaques sur le tronçon de retour **TC2**.

Selon un second mode de réalisation des plaques, la figure 18 illustre une variante où on traite avec un cas particulier les récipients qui ne présentent pas de collerette. Dans ce cas, le récipient ne repose pas directement sur la plaque mais sur un sabot **79** agencé à distance sous la plaque, cette distance correspondant à la hauteur du récipient **5** à traiter. Ce sabot est relié à la plaque par quatre colonnettes **78**.

Tout autre solution permettant de faire reposer récipient **5** sur un support de fond analogue au sabot suscité peut également convenir.

Il faut noter que ci-après tout ce qui n'est pas décrit en particulier doit être considéré comme identique ou similaire à ce qui a été décrit pour le système de manutention des en relation avec les figures 1 à 17.

Selon une variante illustrée à la figure 18, les plaques sont réalisées en deux parties à savoir d'une part une plaque plane notée **1**' avec les logements **18** et d'autre part un profilé technique **17** pour les fonctions guidage et entrainement. Le profilé technique **17** de guidage et entrainement comporte une rainure de guidage **190** dont les fonctions sont identiques à la rainure 19 précédemment décrite.

Ici, le profilé technique **17** de guidage et entrainement comporte deux encoches **160** agencées sur la tranche de la plaque, coté du grand côté. Le profilé technique **17** présente une longueur **PX** identique à la dimension longitudinale de la plaque **PX**. La plaque plane 1' est obtenue à partir d'un flan dans lequel on pratique des perçages, donc elle est facile à réaliser.

Le profilé technique **17** est fixée sous la plaque, i.e. fixé à la face inférieure **1B** de la plaque **1**'. Rien de dépasse du plan supérieur **1A** de la plaque. Le profilé technique **17** est obtenu par moulage plastique.

### Chargement et déchargement des plaques

L'installation comprend un système de chargement et déchargement des plaques support. En particulier, il est prévu de pouvoir décharger des plaques support présentes dans le circuit bouclé de la machine, en direction d'une palette de réception des plaques support repérée généralement **9** aux figures.

Dans l'exemple illustré, cette palette de réception est amenée au niveau du poste du premier poste de rotation. Dans l'exemple illustré, elle est installée sous la première embase tournante **41**. La palette de réception **9** reçoit les plaques support l'une après l'autre en provenance du deuxième tronçon **TC2** du système de manutention.

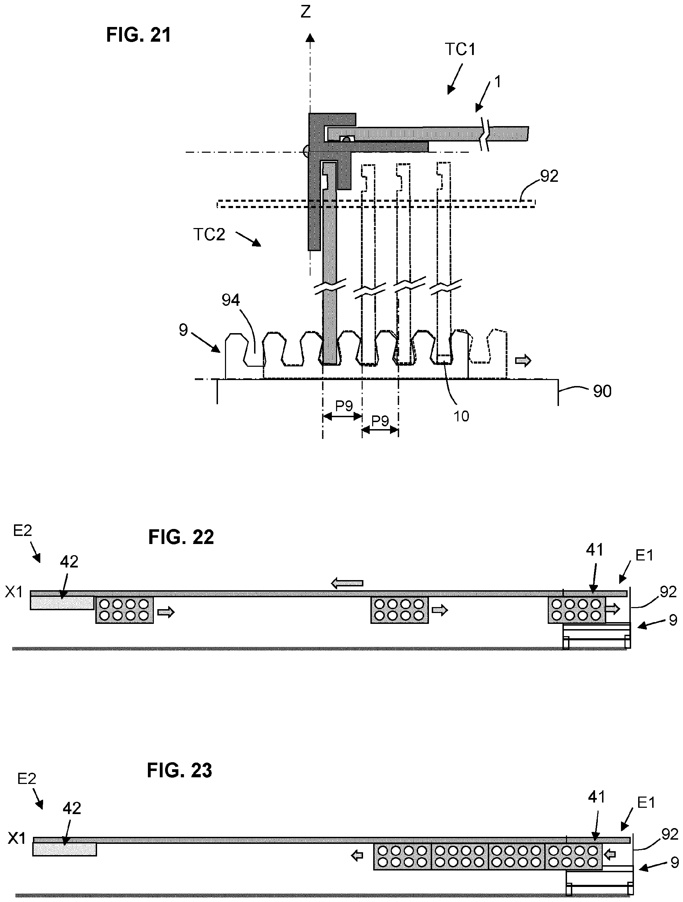

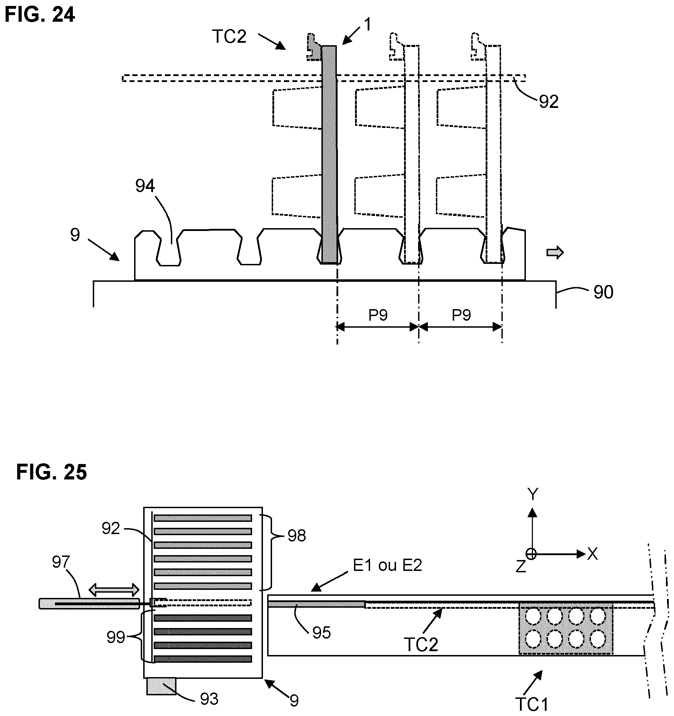

La palette de réception comprend une pluralité d'emplacements **94**. Dans l'exemple illustré, chacun de ces emplacements se présentent comme des rainures parallèles à l'axe longitudinal X de la machine, on parle aussi de 'slot' pour qualifier un emplacement. On dispose plusieurs emplacements parallèlement les uns à côté des autres, espacés les uns des autres selon l'axe transversal Y. Le décalage transversal entre les rainures (c'est-à-dire l'entraxe entre deux rainures voisines) représente une distance **P9** (cf figures 21 et 24).

La distance **P9** peut être comprise entre 10 mm et 50 mm.

La distance **P9** peut être comprise entre 1,5 EPP et 2,5 EPP, EPP représentant l'épaisseur en général de la plaque.

Au fond des rainures, il peut être prévu des formes complémentaires des encoches repérées **10** formées sur le bord libre 12 de chaque plaque support. Ces formes complémentaires permettent une indexation des plaques sur la palette dans le sens longitudinal X. Ces encoches latérales 10 peuvent aussi être utilisées à des fins d'indexation sur les postes de traitement.

On prévoit également un montant de retenue **92** avec des créneaux pour maintenir les plaques en position verticale, comme illustré la figure 21. Le montant de retenue forme aussi une butée dans le mouvement d'insertion à fond de la plaque support sur la palette selon **X**.

Dans l'exemple illustré, la palette de réception **9** comprend un nombre d'emplacements compris entre 16 et 32. Bien entendu le nombre d'emplacements pourrait être inférieur à ces valeurs ou supérieur à ces valeurs.

Il est prévu un châssis **90** sur lequel peut coulisser la palette, le châssis étant agencé à position fixe pendant l'opération de changement ou déchargement. Un système de glissière **96** permet de faire coulisser la palette par rapport au châssis.

De plus il est prévu un équipement de type transpalette **100** pour supporter la palette le temps de l'opération ou bien pour récupérer la palette après l'opération (dans ce cas le châssis **90** supportant la palette peut être posé et indexé sur le châssis général **6** du système de manutention.

On illustre grâce aux figures 22 et 23 le processus de déchargement des plaques support. À chaque fois qu'une plaque support arrive enfin du deuxième tronçon **TC2**, c'est-à-dire au voisinage de la première extrémité du système de manutention, la plaque support, au lieu d'être pivotée en position horizontale, avance tout droit et vient occuper un emplacement **94** de la palette de réception 9.

Lorsque cette plaque est en position de butée (par exemple contre le montant 92) alors la palette est décalée d'une distance **P9** selon la direction transversale Y pour aligner un emplacement vide en face de l'arrivée des plaques en vertical. Une autre plaque arrive ensuite et vient s'insérer dans l'emplacement disponible, et ainsi de suite. Dans ce processus, on remarque que la première embase tournante **41** reste à sa position horizontale c'est-à-dire dans sa deuxième position. Ainsi les formes complémentaires dans l'embase tournante prévues pour maintenir une plaque arrivant en position verticale ne sont ici d'aucun effet. La plaque est ainsi libérée des formes de guidage, car il n'y a en effet pas de nervure **29** disposée à s'engager dans la rainure **19** à cet endroit (en effet l'embase tournante est en position horizontale et non en position verticale comme dans le fonctionnement normal).

Il faut aussi noter que s'il y a une accumulation de plaques en attente pour le déchargement, la butée effaçable **49** permet de faire patienter les plaques en attente pendant le temps que la palette est décalée selon Y pour aligner un emplacement vide en face de la première plaque en attente.

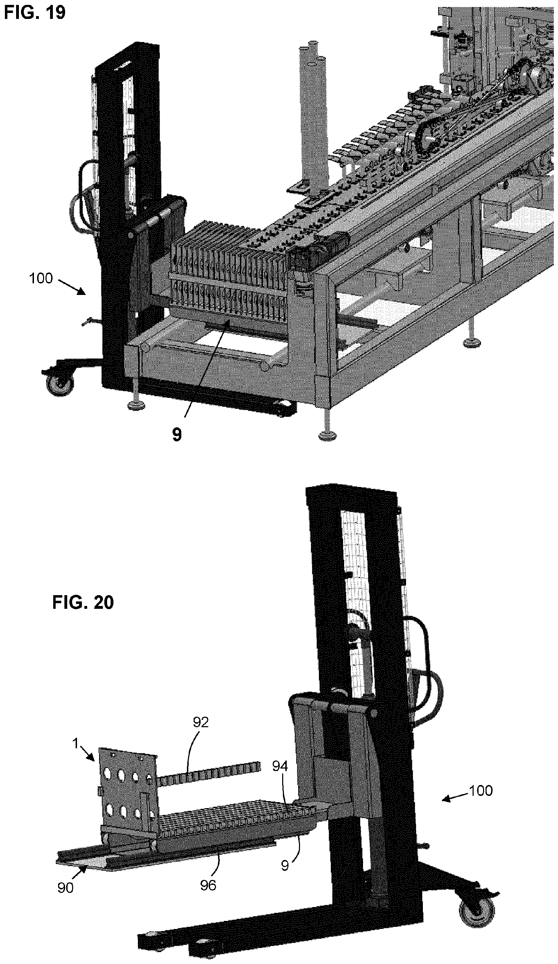

On illustre grâce aux figures 20, 21 et 23 le processus de chargement des plaques support dans le système de manutention. Les plaques support sont initialement rangées dans les emplacements **94** de la palette de réception laquelle se trouve en bout du deuxième tronçon **TC2** au voisinage de la première extrémité **E1** du système de manutention. La première embase tournante **41** reste dans sa deuxième position à savoir la position horizontale.

On fait fonctionner le convoyeur à courroie c'est-à-dire le deuxième organe de déplacement **3** dans le sens inverse du sens habituel pour faire remonter la première plaque qui se trouve en position adjacente convoyeur à courroie, et s'engage dans le guide principal **40** où la nervure **29** s'engage dans la rainure **19** à cet endroit. On a ainsi engagé le guidage à glissière le long du deuxième tronçon **TC2**, la seule différence par rapport au mode normal et que les plaques progressent dans la direction inverse.

Une fois que la plaque a complètement quitté l'emplacement sur la palette, alors on stoppe le mouvement de la courroie et on procède au décalage de la palette d'une distance **P9** pour mettre une nouvelle plaque support au contact de la courroie **34**. Puis on réitère le processus à savoir on pilote la courroie dans le sens inverse au sens normal pour faire remonter cette plaque à rebrousse-poil sur le deuxième tronçon et à l'occasion repousser plus loin la plaque qui a été introduite précédemment.

On procède ainsi de suite pour insérer à l'envers du sens normal une par une les plaques support qui sont entrainées par la courroie pour remonter l'ensemble du deuxième tronçon jusqu'à la deuxième extrémité **E2**.

Selon une variante non représentée aux dessins, la palette de réception pourrait être installée au niveau du deuxième poste de rotation **PR2** à savoir sous la deuxième embase tournante **42**. Moyennant une logique de programmation du deuxième organe de déplacement **3** et de la deuxième embase tournante, on pourrait aussi décharger l'ensemble des plaques support sur la palette de réception à la deuxième extrémité du système de manutention, et aussi procéder au rechargement d'un nouveau jeu de plaques support à cet endroit.

En référence à la Figure 24, dans le cas des supports de récipients décalés du plan de la plaque (e.g. sabots 79 ou autres), on peut prévoir un espacement P9 plus important pour laisser opérer une translation selon X lors du déchargement des plaques 1 sur la palette.

Selon une autre variante non représentée aux figures, on peut prévoir une imbrication partielle des plaques-support les unes dans les autres sur la palette. Un mouvement commande selon Y peut alors être nécessaire, que ce soit une utilisation du mécanisme de décalage en Y déjà mentionné ou un actionneur supplémentaire.

Nous avons illustré précédemment, en lien avec les figures 22 et 23 une opération de déchargement de toutes les plaques 'anciennes', suivie d'une opération de déchargement de toutes les plaques 'nouvelles'.

La figure 25 illustre, en vus de dessus, une deuxième possibilité, consistant en un échange progressif du lot de plaques ; dans ce cas on décharge une 'ancienne' plaque et on installe une 'nouvelle' plaque à la place. On répète cette opération unitaire (déchargement + rechargement) autant de fois qu'il y a de plaques, Lorsque toutes les plaques ont été remplacées, on peut éloigner la palette garnie des anciennes plaques.

En pratique, pour commencer l'opération de remplacement, on amène la palette sur une des deux extrémités du deuxième tronçon, un système de locating/alignement permet de simplifier la mise en place. Il est prévu un manipulateur **97**.

Le manipulateur **97** peut être un vérin équipé d'une pince en bout de tige, pour tirer et/ou pousser une plaque vis-à-vis d'un emplacement sur le deuxième tronçon TC2. Le manipulateur est piloté en conjugaison avec le mécanisme de décalage **93** qui décale en Y les emplacements de palette comme mentionné plus haut.

En se tournant vers la figure 25, une plaque 95 est dans une position prête au déchargement, le manipulateur **97** avance puis la saisit puis la tire sur l'emplacement vide de la palette, cette plaque va rejoindre le lot des plaques déjà déchargées **98**.

Ensuite le mécanisme de décalage **93** décale selon **Y** (vers le haut dans la figure) la palette par rapport au châssis supportant la palette. On a alors une des plaques nouvelles (parmi le lot **99** des plaques à charger) en face des guidages du deuxième tronçon. Le manipulateur **97** pousse la plaque qui s'y trouve depuis l'emplacement de la palette vers les guidages du deuxième tronçon. Ensuite le système de manutention déplace les plaques et amène une ancienne plaque dans la position prête au déchargement/ On répète ainsi de suite les opérations jusqu'au remplacement de toutes les plaques.

## Revendications

1. Système de manutention, dans une machine de traitement de récipients destinés à recevoir un produit alimentaire, le système comprenant :
- une pluralité de plaques-support (1) circulant en circuit fermé, chaque plaque-support (1) comprenant un ou plusieurs logements, chaque logement (18) étant apte à recevoir un récipient (5),
- un premier tronçon (TC1), dit de travail, dans lequel les plaques-support circulent en position horizontale le long d'une première direction axiale (X1A), avec un premier organe de déplacement (2) des plaques-support le long de la première direction axiale,
- un deuxième tronçon (TC2), dit de retour, avec un deuxième organe de déplacement (3) configuré pour déplacer les plaques-support dans une deuxième direction axiale (X1B) opposée à la première direction axiale, **caractérisé en ce que** les plaques-support circulent sur le deuxième tronçon dans un orientation de retour, ladite orientation de retour étant verticale ou éloignée angulairement de la verticale de moins de 30 degrés,
et **en ce que** le système de manutention comprend :
- un premier poste de rotation (PR1) agencé à une première extrémité (E1) du système de manutention, configuré, en fonctionnement normal, pour faire pivoter les plaques-support vers la position horizontale, pour les engager sur le premier tronçon (TC1),
- un deuxième poste de rotation (PR2) agencé à une deuxième extrémité (E2) du système de manutention, configuré, en fonctionnement normal, pour faire pivoter les plaques-support vers l'orientation de retour pour les engager sur le deuxième tronçon (TC2),
et **en ce que** le système de manutention comprend au moins une palette de réception (9) d'une pluralité de plaques-support, configurée pour recevoir de préférence la totalité des plaques-support nécessaires au fonctionnement normal de la machine, ladite palette de réception coopérant avec le premier ou le deuxième poste de rotation (PR1 ,PR2) et le deuxième organe de déplacement (3) pour sélectivement soit décharger des plaques-support depuis le deuxième tronçon jusque sur la palette de réception, soit charger des plaques-support depuis la palette de réception jusque dans le deuxième tronçon.

2. Système selon la revendication 1, dans lequel le premier poste de rotation PR1 comprend une première embase tournante (41), laquelle embase tournante est déplaçable entre une première position adaptée pour accueillir une plaque-support arrivant sur le deuxième tronçon dans un orientation de retour et une deuxième position adaptée pour placer une plaque-support en position horizontale en entrée du premier tronçon.

3. Système selon la revendication 2, dans lequel la palette de réception (9) coopère avec le premier poste de rotation (PR1).

4. Système selon la revendication 3, dans lequel dans une configuration de déchargement des plaques-support depuis le deuxième tronçon jusque sur la palette de réception, la première embase tournante (41) reste dans sa deuxième position de manière à laisser entrer au premier poste de rotation chaque plaque-support (1) avec son orientation de retour, laquelle plaque-support venant alors s'insérer dans un emplacement de la palette de réception (9).

5. Système selon la revendication 3, dans lequel dans une configuration de chargement des plaques-support depuis la palette de réception jusque sur le deuxième tronçon, la première embase tournante (41) reste dans sa deuxième position et le deuxième organe de déplacement fonctionne en sens inverse de son fonctionnement normal, pour faire sortir chaque plaque-support (1) d'un emplacement de la palette de réception (9) et faire remonter chaque plaque-support sur le deuxième tronçon avec son orientation de retour.

6. Système selon l'une des revendications 1 à 5, dans lequel la palette de réception comprend une pluralité d'emplacements (94), espacés et parallèles les uns aux autres, et il est prévu un mécanisme de décalage, débarqué ou embarqué sur la palette elle-même, de manière à positionner un emplacement (94) en alignement avec le parcours des plaques-support sur le deuxième tronçon, de manière à décharger ou charger une plaque-support respectivement depuis ou vers le deuxième tronçon.

7. Système selon la revendication 6, dans lequel les plaques support (1) sont reçues en position verticale sur la palette de réception (9), et sont maintenues dans les emplacements en position verticale, avec de plus une absence de contact mutuel entre les plaques-support.

8. Système selon l'une des revendications 2 à 5, dans lequel il est prévu un élément d'arrêt (49) pour sélectivement stopper ou libérer l'avancement des plaque-support vers la première embase tournante (41), dans lequel :
- l'élément d'arrêt bloque l'arrivée de la plaque support dans la première embase tournante tant que la première embase tournante n'est pas dans sa première position, et
- en mode déchargement, l'élément d'arrêt bloque l'arrivée de la plaque support tant qu'un emplacement de la palette de réception n'est pas disponible pour recevoir la plaque support.

9. Système selon l'une des revendications 1 à 8, dans lequel le deuxième poste de rotation (PR2) comprend une deuxième embase tournante (42).

10. Système selon l'une des revendications 1 à 9, dans lequel le deuxième organe de déplacement (3) est formé comme un convoyeur à courroie (34) en boucle.

11. Système selon l'une des revendications 1 à 9, dans lequel la palette de réception comprend un montant de retenue (92) avec des créneaux pour maintenir les plaques en position verticale.

12. **Machine** pour traiter des pots ou des bouteilles de produit alimentaire, comprenant un système de manutention conforme à l'une des revendications précédentes.
